# EUROPÄISCHE PATENTSCHRIFT

(11) **EP 2 539 186 B1**
(45) Veröffentlichungstag und Bekanntmachung des Hinweises auf die Patenterteilung: **14.01.2015**
(21) Anmeldenummer: 11712188.9
(22) Anmeldetag: 21.02.2011
(51) Int. Cl.: B60R 21/237

(54) **GASSACKVORRICHTUNG FÜR EIN PERSONEN-SCHUTZSYSTEM EINES FAHRZEUGS UND VERFAHREN ZU DESSEN HERSTELLUNG**
AIRBAG DEVICE FOR A PASSENGER PROTECTION SYSTEM OF A VEHICLE AND METHOD OF MAKING
DISPOSITIF SAC GONFLABLE POUR UN SYSTEME DE PROTECTION DES PASSAGERS D'UN VEHICULE ET PROCEDE DE FABRICATION

(30) Priorität: 23.02.2010 DE 102010002261
(43) Veröffentlichungstag der Anmeldung: 02.01.2013
(73) Patentinhaber: Takata AG, 63743 Aschaffenburg (DE)
(72) Erfinder: BAUMGARTNER, Peter, 89312 Günzburg (DE); STECK, Thomas, 89275 Elchingen (DE)
(74) Vertreter: Müller, Wolfram Hubertus
(86) Internationale Anmeldenummer: PCT/EP2011/052509
(87) Internationale Veröffentlichungsnummer: WO 2011/104202

(56) Entgegenhaltungen:
- US-A1- 2003 094 797

## Beschreibung

Die Erfindung betrifft eine Gassackvorrichtung für ein Personen-Schutzsystem eines Fahrzeugs gemäß dem Oberbegriff des Patentanspruchs 1 sowie ein Verfahren zur Herstellung einer solchen Gassackvorrichtung.

Es sind Gassackvorrichtungen bekannt, die dem Schutz des Kopfes eines Fahrzeuginsassen im Crashfall, insbesondere bei einem Seitenaufprall dienen. Solche auch als Kopfairbags oder Kopf-Seitenairbags bezeichnete Gassackvorrichtungen weisen ein gefaltetes Gassackpaket auf, das beispielsweise durch eine Zick-Zack-Faltung oder eine Rollfaltung eines Gassacks hergestellt ist. Das Faltungskonzept beeinflusst dabei die Form des Gassackpakets. So weisen Gassackpakete bei z. B. einer Zick-Zack-Faltung eine quadratische oder rechteckige Form auf. Bei einer Rollfaltung entsteht ein rundes oder leicht ovales Gassackpaket.

Es besteht aufgrund der häufig beengten Platzverhältnisse, die in Fahrzeugen zur Unterbringung einer Gassackvorrichtung bereitstehen, das Bedürfnis, ein hohes Maß an Flexibilität hinsichtlich der Anpassbarkeit eines gefalteten Gassackpakets an den zur Verfügung stehenden Bauraum bereitzustellen.

Zur Sicherung des Verlaufs eines Gassackpakets entlang eines Fahrzeugs ist es bekannt, Kunststoffprofile in vordefinierte Taschen einer flexiblen Hülle einzustecken, die das gefaltete Gassackpaket umgibt. Solche Gassackvorrichtungen für Kopfairbags werden beispielsweise im VW Polo und im Seat Ibiza eingesetzt. Das Einstecken eines Positionierkörpers in eine Tasche einer flexiblen Hülle, die das gefaltete Gassackpaket umgibt, ist auch aus der WO 2009/049695 A1 bekannt.

Die US 2003/0094797 A1 beschreibt eine Gassackvorrichtung nach dem Oberbegriff von Anspruch 1, bei der erste und zweite Befestigungsmittel zur Befestigung einer Umhüllung, in der ich der gefaltete Gassack befindet, an einer Fahrzeugstruktur vorgesehen sind. Die ersten Befestigungsmittel sind jeweils mit einer Öffnung versehene Befestigungslaschen. Die zweiten Befestigungsmittel sind Einlegeelemente, die in Taschen angeordnet und als Magnete oder klebend ausgebildet sind.

Der vorliegenden Erfindung liegt die Aufgabe zugrunde, eine Gassackvorrichtung zur Verfügung zu stellen, die bei beengten Platzverhältnissen eine zusätzliche Anpassungsfähigkeit an den zum Einbau der Gassackvorrichtung benötigten Bauraum ermöglicht. Des Weiteren soll ein Verfahren zur Herstellung einer solchen Gassackvorrichtung bereitgestellt werden.

Diese Aufgabe wird erfindungsgemäß durch eine Gassackvorrichtung mit den Merkmalen des Anspruchs 1 und ein Verfahren mit den Merkmalen des Anspruchs 13 gelöst. Ausgestaltungen der Erfindungen sind in den Unteransprüchen angegeben.

Danach umfasst die Gassackvorrichtung ein unmittelbar mit dem Gassack verbundenes und/oder in diesen eingelegtes Einlegeelement. Das Einlegeelement weist eine Länge auf, die im Wesentlichen der Länge zumindest eines Abschnitts des Gassackpakets entspricht. Das Einlegeelement weist des Weiteren eine Höhe auf, die im Wesentlichen der Höhe des Gassackpakets entspricht. Die Bereitstellung eines derartigen Einlegeelementes ermöglicht es, den gefalteten Gassack hinsichtlich seiner Querschnittsmaße zu definieren und dabei mit gewünschten Querschnittsmaßen zu fixieren. Dabei kann in einer Ausgestaltung vorgesehen sein, dass das gefaltete Gassackpaket gegen das Einlegeelement gedrückt wird, wodurch das gefaltete Gassackpaket in seiner Dicke reduziert wird.

Das Einlegeelement ist folglich dazu vorgesehen und eingerichtet ist, den gefalteten Gassack hinsichtlich seiner Querschnittsmaße zu definieren und dabei mit gewünschten Querschnittsmaßen zu fixieren. Es ist als langgestrecktes Flachprofil ausgebildet.

Darüber hinaus besteht das Einlegeelement aus mehreren Segmenten, die in Längsrichtung des Gassacks aufeinander folgen. Mindestens ein Segment des Einlegeelements weist eine Bohrung zur Durchführung eines Befestigungsmittels auf, das der Befestigung der Gassackvorrichtung in einem Fahrzeug dient. Dieses Segment ist klappbar am Gassackpaket befestigt ist.

Die Bereitstellung einer Gassackvorrichtung mit einem derartigen Einlegeelement erlaubt es somit, die Querschnittsmaße des Gassackpaketes in gewünschter Weise zu definieren und dabei dessen Dicke zu reduzieren. Durch die damit verbundene zusätzliche Flexibilität bei der Ausgestaltung einer Gassackvorrichtung kann erreicht werden, dass auch bei beengten Platzverhältnissen ein Einbau einer Gassackvorrichtung in ein Fahrzeug möglich ist.

Die Segmentierung des Einlegeteils ist mit dem Effekt verbunden, dass sich die Gassackvorrichtung leichter an den Dachverlauf eines Fahrzeugs oder an andere Bereiche des Fahrzeugs, an denen die Gassackvorrichtung montiert werden soll, anpassen lässt. Das heißt, das Einlegeteil bewirkt einerseits eine Größenreduzierung der Gassackvorrichtung bzw. des Gassackpakets und andererseits eine besonders flexible Anpassungsmöglichkeit an unterschiedliche Einbaugeometrien.

Das Einlegeteil dient dabei, insbesondere durch die Bildung einer Gassacklasche des klappbaren Segments, auch als Verdrehsicherung für Befestigungselemente, das heißt als Sicherungselement gegen die Verdrehung von Befestigungselementen.

Als Länge des Gassackpaketes wird die Längserstreckung des Gassackpaketes in eine erste Raumrichtung bezeichnet. Bei einer in ein Kraftfahrzeug eingebauten Gassackvorrichtung für einen Kopfschutz verläuft diese erste Raumrichtung im Wesentlichen parallel zur Fahrzeuglängsachse (x-Achse). Als Höhe des Gassackpaketes wird eine Erstreckung des Gassackpaketes in eine zweite Raumrichtung bezeichnet, die senkrecht zur ersten Raumrichtung verläuft. Zusätzlich weist das Gassackpaket eine Dicke auf, wobei die Dicke eine Erstreckung des Gassackpakets in einer dritten Raumrichtung bezeichnet, die senkrecht zu der ersten und zweiten Raumrichtung verläuft. Eine Dicke weist ein Gassackpaket dabei nicht nur dann auf, wenn es rechteckförmig ausgebildet ist, sondern auch dann, wenn es bogenförmige Begrenzungen, etwa runde oder ovale Begrenzungen aufweist. Die Dicke wird in diesem Fall durch die größte Ausdehnung in der dritten Raumrichtung definiert.

Es wird darauf hingewiesen, dass die Höhe und die Dicke des Gassackpaketes variieren können, beispielsweise aufgrund des Umstandes, dass der Gassack nicht rechteckförmig ausgebildet ist und beim Aufrollen oder Zick-Zack-Falten in unterschiedlichen Bereichen sich unterschiedliche Mengen an Gassackmaterial ansammeln. Als Höhe und Dicke des Gassackpakets im Sinne der vorliegenden Erfindung werden für diesen Fall die maximale Höhe und die maximale Dicke bezeichnet, die das Gassackpaket einnimmt.

Weiter wird darauf hingewiesen, dass die Höhe des Einlegeelementes nicht exakt mit der Höhe des gefalteten Gassackpakets übereinstimmen muss. Eine Übereinstimmung muss lediglich "im Wesentlichen" erfolgen. Dies ist so lange der Fall, wie das Einlegeelement trotz einer unterschiedlichen Höhe verglichen mit der Höhe des Gassackpaketes die Funktion erfüllen kann, die Querschnittsmaße des Gassackpakets zu definieren und dabei die Querschnittsmaße ggf. sogar zu reduzieren, indem das Gassackpaket gegen das Einlegeelement gedrückt und dadurch in seiner Dicke reduziert wird. In einem Ausführungsbeispiel ist dabei vorgesehen, dass die Höhe des Einlegeelementes die Höhe des Gassackpaketes um bis zu 50 % über- oder unterschreitet. In anderen Ausführungsbeispielen über- oder unterschreitet die Höhe des Einlegeelementes die Höhe des Gassackpaketes um bis zu 20 %.

In einer Ausgestaltung der Erfindung ist das Einlegeelement mit einer Lage des Gassacks vernäht und/oder über Befestigungsmittel, die einer Befestigung der Gassackvorrichtung in einem Fahrzeug dienen, mit einer Lage des Gassacks verbunden. Eine eventuell vorhandene zweite Luftsacklage kann dabei als Schutzlage dienen, die über den Befestigungsmitteln angeordnet wird.

In einer weiteren Ausgestaltung ist vorgesehen, dass sich das Einlegeelement an einem oberen, in einem Fahrzeug zu befestigenden Rand des Gassacks in Längsrichtung des Gassacks erstreckt, wobei der Gassack zu dem Einlegeelement hin gefaltet wird. Für den Fall, dass die Gassackvorrichtung Teil eines Kopf-Airbagmoduls ist, entspricht die Längsrichtung des Gassacks dabei der Längsrichtung des Kraftfahrzeugs. Der Gassack wird dabei zu dem oberen Rand und dem sich dort befindenden Einlegeelement hin gefaltet. Die Art der Faltung kann dabei grundsätzlich beliebig sein. In Ausgestaltungen erfolgt eine Zick-Zack-Faltung, eine Rollfaltung oder eine Kombination dieser beiden Faltungen.

An alternativen Ausgestaltungen befindet sich das Einlegeelement nicht an einem oberen, sondern an einem unteren Rand der Gassackvorrichtung, bezogen auf den in ein Fahrzeug eingebauten Zustand der Gassackvorrichtung. Das Einlegeelement erstreckt sich dabei in Längsrichtung des Gassacks entlang des unteren Randes. Der Gassack wird zusammen mit dem Einlegeelement zu dem oberen Rand, entlang dessen der Gassack mit einer Fahrzeugstruktur verbindbar ist, hin gefaltet.

In einer weiteren Ausgestaltung ist vorgesehen, dass eine Fixierung des Einlegeelementes in Bezug auf den Gassack mittels Befestigungsmitteln erfolgt, die einer Befestigung der Gassackvorrichtung in einem Fahrzeug dienen. Bei solchen Befestigungsmitteln handelt es sich beispielsweise um Befestigungselemente, die sich jeweils durch eine Bohrung mindestens einer Gassacklage und des Einlegeelementes erstrecken. Insbesondere kann ein solches Befestigungselement als Rastelement ausgebildet sein, das dazu geeignet und ausgebildet ist, mit einer entsprechenden Öffnung in einer Fahrzeugstruktur in Schnappverbindung zu treten. Dies erlaubt es, ein solches Befestigungselement - bezogen auf den in ein Kraftfahrzeug eingebauten Zustand der Gassackvorrichtung - an der dem Fahrzeuginneren abgewandten Rückseite der Gassackvorrichtung anzubringen, so dass eine Blindmontage möglich ist.

Das Einlegeelement kann aus einem beliebigen Material bestehen. In Ausführungsbeispielen ist es als Kunststoffteil oder als Blechteil ausgebildet.

Wie bereits erwähnt, besteht das Einlegeelement aus mehreren Segmenten, die in Längsrichtung des Gassacks aufeinander folgen. Dabei kann des Weiteren vorgesehen sein, dass unterschiedliche Segmente des Einlegeelementes ein unterschiedliches Profil aufweisen, beispielsweise abhängig von der Dicke des Gassacks in dem betrachteten Segment und/oder in Abhängigkeit von dem zur Verfügung stehenden Bauraum im Bereich des betrachteten Segments.

Wie ebenfalls bereits erwähnt, weist mindestens ein Segment des Einlegeelements eine Bohrung zur Durchführung eines Befestigungsmittels auf. Dieses Segment ist klappbar am Gassackpaket befestigt. Das klappbar am Gassack befestigte Segment bildet eine Gassacklasche aus, die der Befestigung des Gassacks in einem Fahrzeug dient. Eine solche Lasche kann dabei zusammen mit einem durch die Bohrung gesteckten Befestigungsmittel auf das gefaltete Gassackpaket zurückgefaltet und dort beispielsweise mittels eines Klebebandes fixiert werden. Dies erlaubt eine Blindmontage der Gassackvorrichtung.

Das Einlegeelement ist grundsätzlich länglich ausgebildet, d. h., es erstreckt sich über die Gesamtlänge oder zumindest über einen Teilabschnitt der Länge des Gassackpakets. Es ist als langgestrecktes Profil ausgebildet, das grundsätzlich eine beliebige Form, angepasst an die Strukturen im Fahrzeug, aufweisen kann. Vorliegend ist das Einlegeelement als Flachprofil ausgebildet, d. h. es wird durch eine im Wesentlichen rechteckförmige, sich längs erstreckende Platte gebildet. In anderen Ausgestaltungen wird das Einlegeelement durch ein Winkelprofil oder ein Rundprofil gebildet.

Die Gassackvorrichtung weist in einer Ausgestaltung zusätzlich Umhüllungsmittel auf, die das Gassackpaket und das Einlegeelement umhüllen und fixieren. Die Umhüllungsmittel umhüllen das Gassackpaket und das Einlegeelement dabei in einer Ausgestaltung derart, dass das Gassackpaket in einer gegen das Einlegeelement gedrückten Raumform fixiert wird. Die aufgrund der Verwendung eines Einlegeelementes ermöglichte Definition der Querschnittsmaße und/oder Reduktion der Dicke des Gassackpaketes wird somit durch die Umhüllungsmittel aufrechterhalten. Solche Umhüllungsmittel sind beispielsweise eine flexible Hülle oder Klebestreifen.

Bei Verwendung einer flexiblen Hülle als Umhüllungsmittel ist in einer Ausgestaltung vorgesehen, dass die Hülle mindestens einen klappbaren Bereich ausbildet, der dazu ausgebildet und geeignet ist, über einem Befestigungselement, das der Befestigung der Gassackvorrichtung in einem Fahrzeug dient, im eingeklappten Zustand zur Anlage zu kommen. Der eingeklappte klappbare Bereich wird dabei zwischen dem Befestigungselement und dem gefalteten Gassack positioniert und schützt das Gassackmaterial vor einer eventuellen Beschädigung durch das Befestigungselement.

Die Erfindung betrifft des Weiteren ein Verfahren zur Herstellung einer Gassackvorrichtung. Das Verfahren weist die folgenden Schritte auf:
- Bereitstellen eines Gassacks,
- Bereitstellen eines Einlegeelements, das als langgestrecktes Flachprofil ausgebildet ist, eine Länge und eine Höhe aufweist und dazu vorgesehen und eingerichtet ist, den gefalteten Gassack hinsichtlich seiner Querschnittsmaße zu definieren und dabei mit gewünschten Querschnittsmaßen zu fixieren,
- wobei das Einlegeelement aus mehreren Segmenten besteht, die in Längsrichtung des Gassacks aufeinander folgen und wobei mindestens ein Segment des Einlegeelements eine Bohrung zur Durchführung eines Befestigungsmittels aufweist, das der Befestigung der Gassackvorrichtung in einem Fahrzeug dient,
- Befestigen des Einlegeelements an dem Gassack und/oder Einlegen des Einlegeelements in eine Tasche oder Schlaufe des Gassacks,
- Falten des Gassacks zu einem Gassackpaket mit einer Länge und einer Höhe, wobei das Einlegeelement eine Länge aufweist, die im Wesentlichen der Länge zumindest eines Abschnitts des Gassackpakets entspricht, und das Einlegeelement eine Höhe aufweist, die im Wesentlichen der Höhe des Gassackpakets entspricht
- wobei das die Bohrung zur Durchführung eines Befestigungsmittels aufweisende Segment klappbar am Gassackpaket befestigt ist.

In einer Ausgestaltung ist vorgesehen, dass das Gassackpaket nach dem Faltvorgang gegen das Einlegeelement gepresst wird, wobei das Gassackpaket in seiner Dicke reduziert wird. Weiter erfolgt ein Fixieren des dickenreduzierten Gassackpakets beim oder nach dem Pressen derart, dass die Faltung und die reduzierte Dicke aufrechterhalten bleiben. Beispielsweise erfolgt ein Pressen des Gassackpakets gegen das Einlegeelement beim Einziehen des Gassackpakets in eine flexible Hülle oder beim Anbringen von Klebebändern.

Die Erfindung wird nachfolgend unter Bezugnahme auf die Figuren der Zeichnung anhand mehrerer Ausführungsbeispiele näher erläutert. Es zeigen:
- Figuren 1A - 1D: den Faltvorgang sowie das gefaltete Gassackpaket eines ersten Ausführungsbeispiels einer Gassackvorrichtung unter Verwendung eines am oberen Rand eines Gassacks befestigten Einlegeelements;
- Figuren 2A - 2D: den Faltvorgang sowie das gefaltete Gassackpaket eines zweiten Ausführungsbeispiels einer Gassackvorrichtung unter Verwendung eines am oberen Rand eines Gassacks in eine Tasche eingeschobenen Einlegeelements;
- Figuren 3A - 3D: den Faltvorgang sowie das gefaltete Gassackpaket eines drittem Ausführungsbeispiels einer Gassackvorrichtung unter Verwendung eines an einem unteren Rand des Gassacks befestigten Einlegeelements;
- Figur 4: eine Gassackvorrichtung mit einem Gassackpaket und einem als Flachprofil ausgebildeten Einlegeelement;
- Figur 5: eine Gassackvorrichtung mit einem Gassackpaket und einem als Winkelprofil ausgebildeten Einlegeelement;
- Figur 6: eine Gassackvorrichtung mit einem Gassackpaket und einem als Rundprofil ausgebildeten Einlegeelement;
- Figur 7: eine Gassackvorrichtung mit einem Gassackpaket und einem Einlegeelement, das durch ein Profil mit grundsätzlich beliebiger Form ausgebildet ist;
- Figuren 8A, 8B: eine Gassackvorrichtung mit einem gefalteten Gassackpaket, einem Einlegeelement und einer flexiblen Hülle, wobei ein Zugang zum Befestigungselement bereitgestellt werden kann;
- Figuren 9A, 9B: eine erste Ausführungsvariante zur Anbringung eines Befestigungselementes an einer Gassackvorrichtung, die ein gefaltetes Gassackpaket und ein Einlegeelement aufweist;
- Figuren 10A, 10B: eine zweite Ausführungsvariante zur Anbringung eines Befestigungselementes an einer Gassackvorrichtung, die ein gefaltetes Gassackpaket und ein Einlegeelement aufweist;
- Figuren 11A, 11B: eine dritte Ausführungsvariante zur Anbringung eines Befestigungselementes an einer Gassackvorrichtung, die ein gefaltetes Gassackpaket und ein Einlegeelement aufweist; und
- Figuren 12A - 12C: ein Ausführungsbeispiel einer Gassackvorrichtung mit einem gefalteten Gassackpaket, einem Einlegeelement und einer flexiblen Schutzhülle, wobei die flexible Schutzhülle einen klappbaren Bereich ausbildet, der als Schutzlage dient.

Die Erfindung wird nachfolgend an Gassackvorrichtungen beschrieben, die in Form einer Kopfschutz-Vorrichtung ausgebildet sind, die sich im montierten Zustand entlang einer seitlichen Fahrzeugstruktur erstreckt und bei der der Gassack im aufgeblasenen Zustand ein oder mehrere aufgeblasene Bereiche bildet, mit denen insbesondere mindestens eine seitliche Fensterscheibe eines Kraftfahrzeuges weitgehend überdeckbar wird. Die Beschreibung der Erfindung anhand solcher Gassackvorrichtungen für einen Kopfschutz eines Fahrzeuginsassen bei einem Seitenaufprall ist jedoch lediglich beispielhaft zu verstehen. Die Prinzipien der vorliegenden Erfindung können ebenso bei anderen Arten von Gassackvorrichtungen realisiert werden, beispielsweise bei Gassackvorrichtungen, die als Seitenairbags ausgebildet sind oder bei Gassackvorrichtungen, die an der Außenhaut eines Kraftfahrzeugs angeordnet sind und dem Schutz anderer Verkehrsteilnehmer wie z.B. Fußgängern dienen.

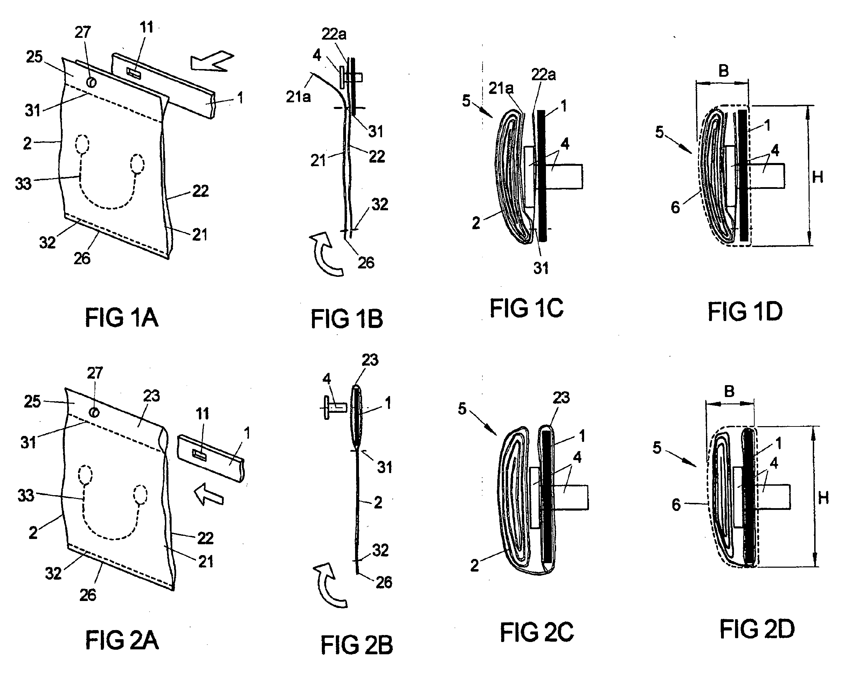

Die Figuren 1A bis 1D zeigen ein erstes Ausführungsbeispiel einer Gassackvorrichtung, die ein gefaltetes Gassackpaket sowie ein Einlegeelement umfasst, sowie eine Abfolge von Verfahrensschritten zur Herstellung einer solchen Gassackvorrichtung.

Gemäß der Figur 1A ist ein Gassack 2 vorgesehen, der aus zwei Gassacklagen 21, 22 besteht. Die Gassacklagen 21, 22 sind über zwei Nähte 31, 32 miteinander verbunden, die im Bereich eines oberen Randes 25 des Gassacks 2 und im Bereich eines unteren Randes 26 des Gassacks 2 ausgebildet sind und sich in Längsrichtung des flach ausgebreiteten Gassackes erstrecken. Zusätzlich können optional Abnäher 33 zur Definition unterschiedlicher Bereiche des Gassacks 2 vorgesehen sein. Über einen nicht dargestellten Gasgenerator wird im Auslösefall Gas in den Gassack 2 eingeleitet, wodurch ein großflächiges Gaskissen zum Schutz eines Fahrzeuginsassen im Crash-Fall gebildet wird.

Oberhalb der oberen Naht 31 bilden die beiden Gassacklagen 21, 22 zwei Gewebestreifen 21 a, 22a aus. Es ist ein Einlegeelement 1 vorgesehen, das als Flachprofil ausgebildet ist und sich ebenfalls in Längsrichtung des Gassacks 2 erstreckt. Die Höhe der Materialstreifen 21 a, 22a entspricht dabei im Wesentlichen der Höhe des Einlegeelementes 1.

Das Einlegeelement 1 ist mit dem einen Materialstreifen 22a verbunden. Dies erfolgt beispielsweise über ein Befestigungselement 4, das zum einen durch eine Öffnung 27 in der Gewebelage 22a und zum anderen durch eine Öffnung 11 in dem Einlegeelement 1 durchgesteckt wird. Das Befestigungselement 4 kann dabei Rastelemente aufweisen, die mittels einer Schnappverbindung mit entsprechenden Rastelementen in einem Fahrzeug zur Befestigung in der Gassackvorrichtung im Fahrzeug verbindbar sind.

Gemäß der Figur 1B erfolgt durch das Befestigungselement 4 eine Verbindung des Einlegeelementes 4 mit der einen Gassacklage 22a. Es können mehrere solcher Befestigungselemente 4 in Längsrichtung des Gassacks 2 vorgesehen sein. Dabei wird darauf hingewiesen, dass die Figur 1A nur einen Ausschnitt des Gassacks 2 und des Einlegeelementes 1 darstellt.

Statt oder ergänzend zu einer Verbindung des Einlegeelementes 1 mit der einen Gassacklage 22a können auch andere Verbindungsmittel zur Verbindung des Einlegeelementes 1 mit der Gassacklage 22a vorgesehen sein. Beispielsweise kann ein Vernähen oder Verkleben erfolgen.

Die zweite Gassacklage 21 a dient als Schutzlage über dem Befestigungselement 4. Insbesondere schützt diese Schutzlage 21 a den gefalteten Gassack 2 vor einer möglichen Beschädigung durch das Befestigungselement 4.

Gemäß der Figur 1B wird der Gassack von seinem unteren Rand 26 aus in Richtung des oberen Randes 25 gefaltet. Diese Faltung erfolgt beispielsweise als Rollfaltung, wie in den Figuren 1C und 1D dargestellt. Ebenso kann jedoch auch eine Zick-Zack-Faltung, eine Kombination einer Rollfaltung und einer Zick-Zack-Faltung oder jede beliebige andere Faltung eingesetzt werden.

Die Faltung des Gassacks 2 zu einem Gassackpaket 5 erfolgt derart, dass die Höhe H des gefalteten Gassacks im Wesentlichen der Höhe des Einlegeelementes 1 entspricht. Weiter weist das Einlegeelement 1 eine Länge (senkrecht zur Zeichenebene) auf, die der Länge des gesamten Gassackpakets 5 oder zumindest eines Abschnitts oder Teilbereichs des Gassackpakets 5 entspricht.

Die Figur 1C zeigt das gefaltete Gassackpaket 5, das vollständig auf einer der beiden Seiten des flach ausgebildeten Einlegeelementes 1 ausgebildet ist. Aufgrund der im Wesentlichen übereinstimmenden Maße von Gassackpaket und Einlegeelement 1 ist es möglich, das Gassackpaket 5 gegen das Einlegeelement zu drücken und hierdurch die Querschnittsmaße des Gassackpaketes 5 neu zu definieren. Beispielsweise ist es möglich, eine runde oder ovale Form des Gassackpakets, die ursprünglich aufgrund einer Rollfaltung vorliegt, flach zu drücken und dabei die Dicke B des Gassackpakets zu reduzieren.

Zur Fixierung der neu definierten und ggf. dickenreduzierten Raumform des Gassackpakets 5 ist ein Umhüllungsmittel in Form einer flexiblen Hülle 6 vorgesehen, die um das Gassackpaket 5 und das Einlegeelement 1 gezogen wird. Die Gassackvorrichtung ist dann fertig hergestellt und dafür vorgesehen und eingerichtet, in einem Kraftfahrzeug montiert zu werden.

Da die Befestigungselemente 4 auf der Rückseite des Gassackpakets hervorstehen, ist eine Blindmontage möglich. Gesonderte Befestigungslaschen, die von dem gefalteten Gassackpaket 5 abstehen, sind nicht erforderlich.

Durch das Einlegeelement 1 können somit eine definierte Höhe H und eine definierte und dabei reduzierte Dicke B des Gassackpaketes bereitgestellt werden. Die Dicke B ist dabei abhängig von der Höhe H des Einlegeelementes 1 sowie dem Abdeckbereich des Gassackes in z-Richtung bezogen auf den in ein Kraftfahrzeug eingebauten Zustand der Gassackvorrichtung.

Die Figuren 2A bis 2D zeigen ein alternatives Ausführungsbeispiel, das sich vor dem Ausführungsbeispiel der Figuren 1A bis 1D durch die Art der Befestigung des Einlegeelementes 1 am Gassack 2 unterscheidet. So ist bei diesem Ausführungsbeispiel am oberen Rand 25 eine Tasche 23 ausgebildet, die beispielsweise durch Vernähen der beiden Materialstreifen 21 a, 22a der Figuren 1A bis 1D gebildet ist. Die Tasche 23 kann aber alternativ auch gesondert hergestellt und dann mit dem Gassack 2 verbunden werden. Das Einlegeelement 1 wird in die Tasche 23 eingeschoben und auf diese Weise mit dem Gassack verbunden. Die Fixierung des Einlegeelementes 1 in Bezug auf den Gassack 2 erfolgt wiederum mittels einer oder mehrerer Befestigungselemente 4, die durch Löcher 27 in beiden Lagen der Tasche 23 sowie eine Öffnung 11 im Einlegeelement 1 greifen.

Das Falten des Gassacks erfolgt wie in Bezug auf die Figuren 1A bis 1D beschrieben. Nach dem Falten liegt wiederum ein Gassackpaket 5 vor, das definierte Abmessungen aufweist, durch Pressen gegen das Einlegeelement 1 in seiner Dicke reduzierbar ist und das in seiner dickenreduzierten Raumform mittels einer Hülle 6 fixiert wird. Ein Pressen des Gassackpaketes 5 gegen das Einlegeelement 1 muss dabei nicht in einem gesonderten Verfahrensschritt, sondern kann beim Überziehen der Hülle 6 erfolgen.

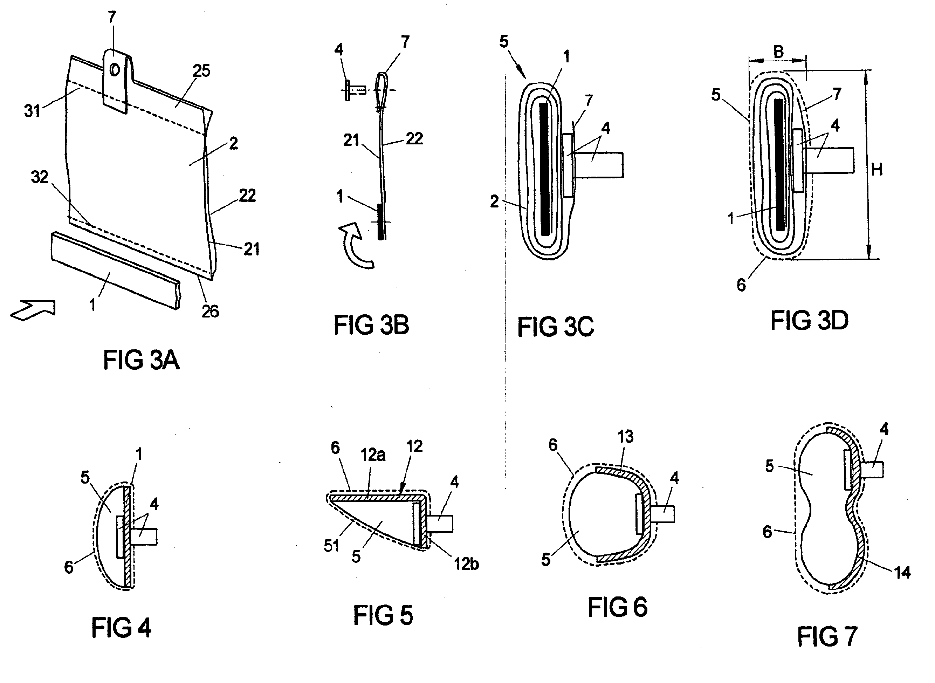

Die Figuren 3A bis 3D zeigen ein Ausführungsbeispiel, bei dem das Einlegeelement 1 nicht am oberen Rand 25, sondern am unteren Rand 26 des Gassacks 2 befestigt ist. Dabei wird das Einlegeelement 1 auf beliebige Weise mit dem unteren Ende 26 des Gassacks 2 verbunden. Der Faltvorgang erfolgt derart, dass der Gassack 2 zusammen mit dem Einlegeelement 1 zu dem oberen Rand 25 hin gefaltet wird. Dargestellt ist wiederum eine Rollfaltung, wobei ebenso eine andere Faltung wie eine Zick-Zack-Faltung oder eine kombinierte Roll- und Zick-Zack-Faltung erfolgen kann.

Im Ausführungsbeispiel der Figuren 3A bis 3D weist der Gassack 2 zusätzliche Gassacklaschen 7 auf, die der Befestigung des Gassacks am Kraftfahrzeug mittels Bolzen 4, die die Laschen 7 durchgreifen, dienen.

Das gefaltete Gassackpaket 5 weist eine Höhe auf, die im Wesentlichen der Höhe H des Einlegeelementes 1 entspricht. Des Weiteren wird eine bestimmte Dicke B bereitgestellt, die durch Drücken bzw. Pressen des gefalteten Gassacks gegen das Einlegeelement 1 reduziert werden kann. Nach dem Falten und Einziehen des Gassacks in ein Cover 6 ergibt sich analog zu den Ausgestaltungen der Figuren 1A bis 1D und der Figuren 2A bis 2D ein Gassack-Package, das eine gewünschte Höhe H und eine gewünschte Dicke B aufweist. Das Maß der Dicke B ist dabei wiederum abhängig von der Höhe H des Einlegeelementes 1 und den Abdeckbereich des Gassackes in z-Richtung.

Es wird darauf hingewiesen, dass bei der Ausgestaltung der Figuren 3A bis 3D das gefaltete Gassackpaket 5 aufgrund des Aufwickelns des Einlegeelements 1 bei der Rollfaltung gegenüber dem Einlegeelement 1 übersteht. Insofern ist die Höhe H des Gassackpakets etwas größer als die Höhe des Einlegeelementes 1. Die Höhe des Einlegeelementes 1 und des gefalteten Gassackpaketes 5 sind aber "im Wesentlichen" identisch in dem Sinne, dass das Einlegeelement 1 trotz der unterschiedlichen Höhe dazu geeignet und ausgebildet ist, definierte Querschnittsmaße des Gassackpaketes bereitzustellen und mittels der Umhüllung 6 aufrecht zu erhalten.

In den Figuren 1A bis 3D ist das Einlegeelement 1 als einstückiges Flachprofil dargestellt. Erfindungsgemäß besteht das Einlegeelement 1 aus einer Mehrzahl einzelner Segmente, die in Längsrichtung des Gassacks aufeinander folgen. Es stellt lediglich ein Ausführungsbeispiel dar, dass das Einlegeelement 1 als Flachprofil ausgebildet ist. Mögliche Profilformen sind in den Figuren 4 bis 7 dargestellt. Es kann des Weiteren vorgesehen sein, dass einzelne Segmente unterschiedliche Profile aufweisen.

In der Figur 4 ist eine Gassackvorrichtung mit einem gefalteten Gassackpaket 5, einem Flachprofil 1 und einer flexiblen Hülle 6 dargestellt, die der Gassackvorrichtung der Figuren 1D, 2D und 3D entspricht. In einem solchen Flachprofil kann beispielsweise eine Rollfaltung flachgedrückt oder eine Zick-Zack-Faltung zusätzlich in ihrer Dicke reduziert werden.

Die Figur 5 zeigt ein Winkelprofil 12, das zwei Schenkel 12a, 12b aufweist, die rechtwinklig zueinander verlaufen und die an zwei Seiten eines gefalteten Gassackpakets 5 anliegen. Zwischen diesen Schenkeln 12a, 12b weist das Gassackpaket 5 einen bogenförmigen Verlauf 51 auf, wobei der Radius des Bogens 51 vor der Art des Winkelprofils 12 abhängt.

Die Figur 6 zeigt ein Einlegeelement, das als Rundprofil 13 ausgebildet. Die Figur 7 zeigt ein Beispiel für ein Profil 14 beliebiger Form, das in Abhängigkeit davon gestaltet wird, wie die Form des Gassackpakets dem Rohbau eines Kraftfahrzeuges am besten angepasst werden kann.

Es wird darauf hingewiesen, dass auch bei den Ausführungsbeispielen des Einlegeelementes 1, 12, 13, 14 der Figuren 4 bis 7 die Höhe des Einlegeelements 1, 12, 13, 14 im Wesentlichen der Höhe des gefalteten Gassackpaketes 5 entspricht.

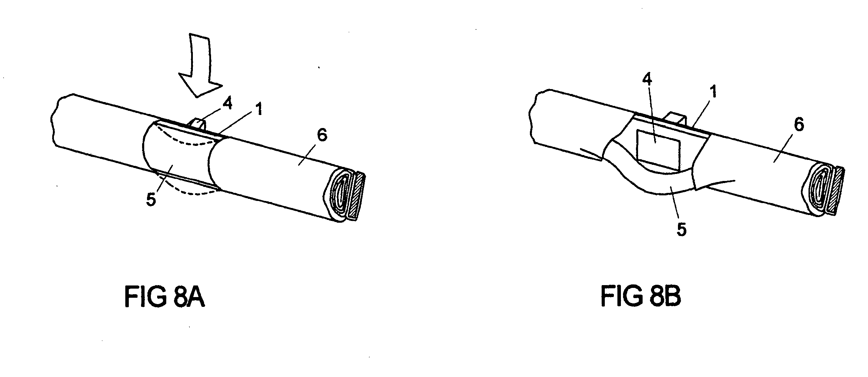

Die Figuren 8A und 8B verdeutlichen die Zugänglichkeit eines Befestigungselementes 4 für den Fall, dass die Gassackvorrichtung demontiert werden muss. Hierzu ist vorgesehen, dass eine flexible Höhle 6 im Bereich des Befestigungselementes 4 freigeschnitten ist oder im Bedarfsfall freigeschnitten wird. Das über dem Befestigungselement 4 befindliche Gassackpaket 5 wird dann etwas zur Seite geschoben, vgl. Figur 8B. Danach ist das Befestigungselement 4 zugänglich und das Modul lässt sich entsprechend einer Demontageanleitung demontieren.

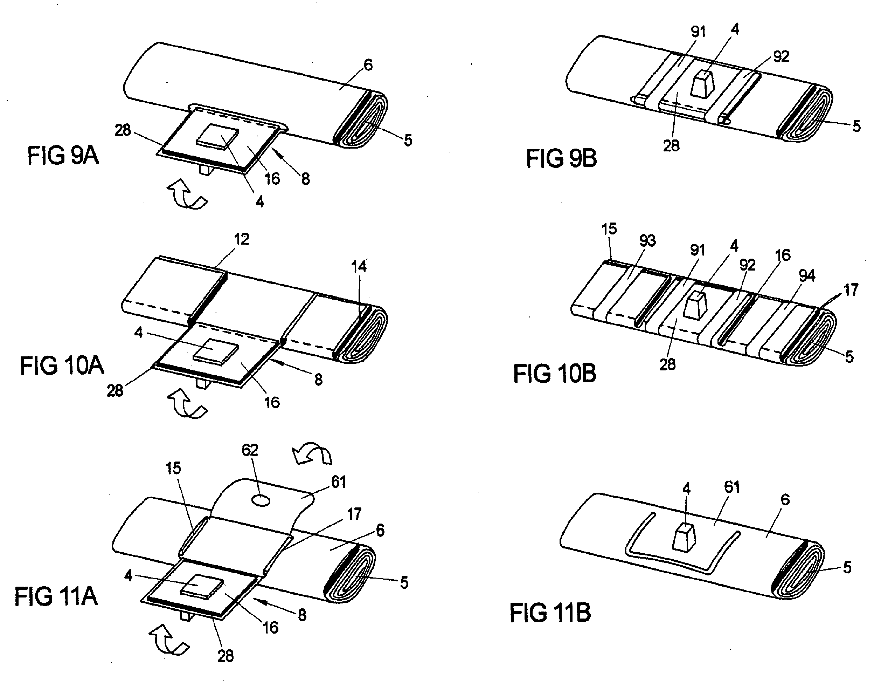

Die Figuren 9A, 9B, 10A, 10B, 11A, 11B zeigen drei Varianten zur Anordnung eines Befestigungselementes 4 auf der Rückseite einer Gassackvorrichtung, die beispielsweise entsprechend der Gassackvorrichtung der Figuren 1A bis 1D ausgebildet ist. Die Rückseite ist dabei diejenige Seite der Gassackvorrichtung, die bei einer Montage der Gassackvorrichtung in einem Fahrzeug in Richtung der seitlichen Fahrzeugstruktur weist.

In allen drei Varianten ist das Einlegeelement 1 nicht einstückig ausgebildet, sondern im Bereich jeweils eines Befestigungselementes 4 beidseitig unterbrochen. Ein entsprechender Abschnitt 16 des Einlegeelements 1 ist in Figur 9A dargestellt. Der Abschnitt 16 ist mit einem entsprechend geformten Materialabschnitt 28 des Gassacks über das Befestigungselement 4 verbunden und auf diese Weise klappbar am Gassackpaket 5 befestigt. Der Abschnitt 16 und der Materialabschnitt 28 bilden eine Gassacklasche 8 zur Befestigung der Gassackvorrichtung an einer Fahrzeugstruktur.

Das Gassackpaket 5 ist mit einer durchgehenden flexiblen Hülle 6 umgeben. Die durch den Materialabschnitt 28 und den Abschnitt 16 des Einlegeelementes gebildete Lasche 8 ist durch einen Ausschnitt in der Hülle 6 aus dieser herausgeführt.

Nach dem Einziehen der Hülle 6 über das gefaltete Gassackpaket und die anderen Abschnitte des Einlegeelementes wird die Gassacklasche 8 auf der Rückseite der Gassackvorrichtung beispielsweise mittels zweier Klebestreifen 91, 92 fixiert. Durch das Zurückklappen der Gassacklasche auf die Hülle 6 und das Gassackpaket 5 wird die Gesamthöhe der Anordnung auf die Höhe des Gassackpaketes bzw. des Einlegeelementes 1 reduziert. Gleichzeitig wird die Möglichkeit einer Blindmontage durch das rückseitenmontierte Befestigungselement 4, das Rastelemente zur Bildung eines Schnappverschlusses aufweist, bereitgestellt.

Die Ausführungsvariante der Figuren 10A, 10B entspricht bis auf den Umstand der Ausführungsvariante der Figuren 9A, 9B, dass die Gassackvorrichtung keine flexible Hülle aufweist. Stattdessen wird das gefaltete Gassackpaket mit Klebestreifen 93, 94 fixiert. Es sind bei den Figuren 10A, 10B weitere Segmente 15, 17 des Einlegeelementes zu erkennen.

Bei der Ausführungsvariante der Figuren 11A, 11B ist die flexible Hülle 6 im Bereich der Gassacklaschen 8 derart ausgeschnitten, dass sich nach dem Einziehen des Gassackpaketes und des Einlegeelementes in die Hülle 6 dieser Teil wegklappen lässt. Die Gassacklasche 8 ist entsprechend den Figuren 9A, 9B, 10A, 10B ausgebildet. Es wird die Gassacklasche 8 auf das Gassackpaket 5 gelegt bzw. geklappt und ein klappbarer Bereich 61 der flexiblen Hülle 6 anschließend über dem Befestigungselement 4 fixiert. Durch ein Loch 62 in dem klappbaren Bereich 61 ragt das Befestigungselement 4 durch. Zusätzlich kann eine Fixierung mittels Klebestreifen erfolgen.

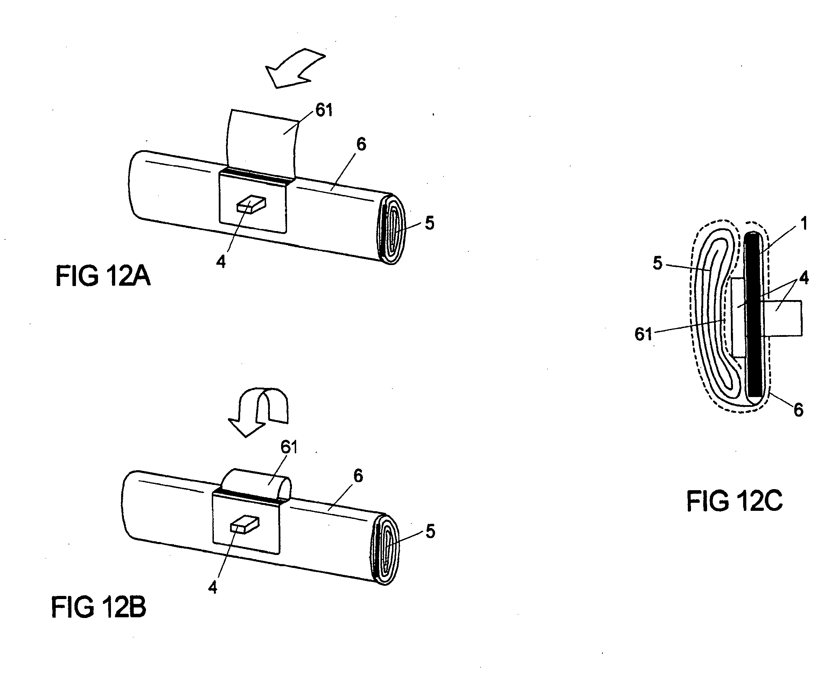

Die Figuren 12A, 12B, 12C zeigen ein Ausführungsbeispiel, bei dem eine flexible Hülle 6 ähnlich wie bei den Figuren 11A, 11B einen klappbaren Bereich 61 ausbildet. Dieser wird nach dem Einziehen des Gassackpaketes 5 und des Einlegeelementes 1 in die flexible Hülle 6 derart eingeklappt, dass er über dem Befestigungselement 4 und zwischen dem Befestigungselement 4 und dem Gassackpaket 5 zur Anlage kommt. Dies dient einem Schutz eines Gassackpakets 5. Das Einlegeelement 1 ist dabei aus mehreren Segmenten entsprechend den Figuren 9A, 9B, 10A, 10B, 11A, 11B gebildet.

## Patentansprüche

1. Gassackvorrichtung für ein Personen-Schutzsystem eines Fahrzeugs, mit
- einem gefalteten Gassack (2), der ein Gassackpaket (5) bildet, das eine Länge und eine Höhe (H) aufweist, und
- einem unmittelbar mit dem Gassack (2) verbundenen und/oder in diesen eingelegten Einlegeelement (1, 12, 13, 14), das eine Länge aufweist, die im Wesentlichen der Länge zumindest eines Abschnitts des Gassackpakets (5) entspricht, und das eine Höhe aufweist, die im Wesentlichen der Höhe (H) des Gassackpakets (5) entspricht,
wobei das Einlegeelement dazu vorgesehen und eingerichtet ist, den gefalteten Gassack hinsichtlich seiner Querschnittsmaße zu definieren und dabei mit gewünschten Querschnittsmaßen zu fixieren, und als langgestrecktes Flachprofil ausgebildet ist, und
wobei das Einlegeelement (1, 12, 13, 14) aus mehreren Segmenten (15, 16, 17) besteht, die in Längsrichtung des Gassacks (2) aufeinander folgen,
**dadurch gekennzeichnet,**
**dass** mindestens ein Segment (16) des Einlegeelements (1, 12, 13, 14) eine Bohrung (11) zur Durchführung eines Befestigungsmittels (4) aufweist, welches der Befestigung der Gassackvorrichtung in einem Fahrzeug dient, und dass dieses Segment (16) klappbar am Gassackpaket (5) befestigt ist, so dass as eine Gassadelauche (8) bildet.

2. Gassackvorrichtung nach Anspruch 1, **dadurch gekennzeichnet, dass** das Einlegeelement (1) mit einer Lage (22a) des Gassacks (2) vernäht und/oder über Befestigungsmittel (4), die einer Befestigung der Gassackvorrichtung in einem Fahrzeug dienen, mit einer Lage (22a) des Gassacks (2) verbunden ist.

3. Gassackvorrichtung nach Anspruch 1 oder 2, **dadurch gekennzeichnet, dass** das Einlegeelement (1) sich an einem oberen, in einem Fahrzeug zu befestigenden Rand (25) des Gassacks (2) in Längsrichtung des Gassacks (2) erstreckt, wobei der Gassack (2) zu dem Einlegeelement (1) hin gefaltet wird.

4. Gassackvorrichtung nach Anspruch 1 oder 2, **dadurch gekennzeichnet, dass** das Einlegeelement (1) sich an einem unteren, auf einen oberen Rand (25) hin zu faltenden Rand (26) des Gassacks (2) in Längsrichtung des Gassacks (2) erstreckt, wobei der Gassack (2) zusammen mit dem Einlegeelement (1) zu dem oberen Rand (25) hin gefaltet wird.

5. Gassackvorrichtung nach einem der vorangehenden Ansprüche, **dadurch gekennzeichnet, dass** eine Fixierung des Einlegeelements (1) in Bezug auf den Gassack (2) mittels Befestigungsmitteln (4) erfolgt, die einer Befestigung der Gassackvorrichtung in einem Fahrzeug dienen.

6. Gassackvorrichtung nach Anspruch 5, **dadurch gekennzeichnet, dass** die Befestigungsmittel (4) mindestens ein Befestigungselement umfassen, das sich jeweils durch eine Bohrung (27) mindestens einer Gassacklage (22a) und einer Bohrung (11) des Einlegeelements (1) erstreckt.

7. Gassackvorrichtung nach einem der vorhergehenden Ansprüche, **dadurch gekennzeichnet, dass** mindestens zwei Segmente des Einlegeelements (1) ein unterschiedliches Profil aufweisen.

8. Gassackvorrichtung nach einem der vorangehenden Ansprüche, **gekennzeichnet durch** Umhüllungsmittel (6, 91-94), die das Gassackpaket (2) und das Einlegeelement (1, 12, 13, 14) umhüllen, wobei die Umhüllungsmittel (6, 91-94) das Gassackpaket (2) in einer gegen das Einlegeelement (1, 12, 13, 14) gedrückten Raumform fixieren.

9. Gassackvorrichtung nach Anspruch 8, **dadurch gekennzeichnet, dass** die Umhüllungsmittel durch eine flexible Hülle (6) gebildet sind, wobei die Hülle (6) mindestens einen klappbaren Bereich (61) ausbildet, der dazu ausgebildet und geeignet ist, über einem Befestigungselement (4), das einer Befestigung der Gassackvorrichtung in einem Fahrzeug dient, im eingeklappten Zustand zur Anlage zu kommen.

10. Gassackvorrichtung nach einem der vorangehenden Ansprüche, **dadurch gekennzeichnet, dass** die Bohrung (11) eine rechteckförmige Öffnung ist.

11. Gassackvorrichtung nach einem der vorangehenden Ansprüche, **dadurch gekennzeichnet, dass** der Gassack (2) zu dem Einlegeelement (1, 12, 13, 14) hin gefaltet ist.

12. Gassackvorrichtung nach einem der vorangehenden Ansprüche, **dadurch gekennzeichnet, dass** die mehreren Segmente (15, 16, 17), aus denen das Einlegeelement (1, 12, 13, 14) besteht, in Längsrichtung des Gassacks (2) unmittelbar aufeinander folgen.

13. Verfahren zur Herstellung einer Gassackvorrichtung gemäß Anspruch 1, mit den Schritten:
- Bereitstellen eines Gassacks (2),
- Bereitstellen eines Einlegeelementes (1, 12, 13, 14), das als langgestrecktes Flachprofil ausgebildet ist, eine Länge und eine Höhe aufweist und dazu vorgesehen und eingerichtet ist, den gefalteten Gassack hinsichtlich seiner Querschnittsmaße zu definieren und dabei mit gewünschten Querschnittsmaßen zu fixieren,
- wobei das Einlegeelement (1) aus mehreren Segmenten (15, 16, 17) besteht, die in Längsrichtung des Gassacks (2) aufeinander folgen und wobei mindestens ein Segment (16) des Einlegeelements (1) eine Bohrung (11) zur Durchführung eines Befestigungsmittels (4) aufweist, welches der Befestigung der Gassackvorrichtung in einem Fahrzeug dient,
- Befestigen des Einlegeelementes (1, 12, 13, 14) an dem Gassack (2) und/oder Einlegen des Einlegeelements (1, 12, 13, 14) in eine Tasche (23) oder Schlaufe des Gassacks (2),
- Falten des Gassacks (2) zu einem Gassackpaket (5) mit einer Länge und einer Höhe (H), wobei das Einlegeelement (1, 12, 13, 14) eine Länge aufweist, die im Wesentlichen der Länge zumindest eines Abschnitts des Gassackpakets (5) entspricht, und das Einlegeelement (1, 12, 13, 14) eine Höhe aufweist, die im Wesentlichen der Höhe (H) des Gassackpakets (5) entspricht,
- wobei das die Bohrung (11) zur Durchführung eines Befestigungsmittels (4) aufweisende Segment (16) klappbar am Gassackpaket (5) befestigt wird.

14. Verfahren nach Anspruch 13, **gekennzeichnet durch** Pressen des Gassackpakets (2) gegen das Einlegeelement (1, 12, 13, 14), wobei das Gassackpaket (5) in seiner Dicke (B) reduziert wird, und Fixieren des dickenreduzierten Gassackpakets (5) beim oder nach dem Pressen derart, dass die Faltung und die reduzierte Dicke aufrechterhalten bleiben.

15. Verfahren nach Anspruch 13 oder 14, **dadurch gekennzeichnet, dass** der Gassack (2) zu dem Einlegeelement (1, 12, 13, 14) hin gefaltet wird.

## Claims

1. Air bag device for a person protection system of a vehicle, having
- a folded air bag (2) which forms an air bag package (5) having a length and a height (H), and
- an inlay element (1, 12, 13, 14), directly connected to and/or placed into the air bag (2), having a length which essentially corresponds to the length of at least a section of the air bag package (5) and having a height which essentially corresponds to the height (H) of the air bag package (5),
wherein the inlay element is provided and arranged to define the folded air bag regarding its cross-section dimensions and to thereby fix it with desired cross-section dimensions and is designed as an elongated flat section, and
wherein the inlay element (1, 12, 13, 14) is made of multiple segments (15, 16, 17) succeeding one another in the longitudinal direction of the air bag (2),
**characterized in that**
at least one segment (16) of the inlay element (1, 12, 13, 14) has a bore (11) through which to pass a fastening means (4) which serves to fasten the air bag device in a vehicle, and **in that** this segment (16) is foldably fastened on the air bag package (5) so that it forms an air bag flap (8).

2. Air bag device according to Claim 1, **characterized in that** the inlay element (1) is sewn together with a layer (22a) of the air bag (2) and/or is connected to a layer (22a) of the air bag (2) via fastening means (4) which serve to fasten the air bag device in a vehicle.

3. Air bag device according to Claim 1 or 2, **characterized in that** the inlay element (1) extends in the longitudinal direction of the air bag (2) on an upper edge (25) of the air bag (2), which said edge (25) is to be fastened in a vehicle, wherein the air bag (2) is folded towards the inlay element (1).

4. Air bag device according to Claim 1 or 2, **characterized in that** the inlay element (1) extends in the longitudinal direction of the air bag (2) on a lower edge (26) of the air bag (2), which said edge (26) is to be folded up towards an upper edge (25), wherein the air bag (2) is folded towards the upper edge (25) together with the inlay element (1).

5. Air bag device according to any of the preceding claims, **characterized in that** a fixing of the inlay element (1) in relation to the air bag (2) takes place by means of fastening means (4) which serve to fasten the air bag device in a vehicle.

6. Air bag device according to Claim 5, **characterized in that** the fastening means (4) comprise at least one fastening element which extends through a bore (27) of at least one air bag layer (22a) and a bore (11) of the inlay element (1), respectively.

7. Air bag device according to any of the preceding claims, **characterized in that** at least two segments of the inlay element (1) have a different profile.

8. Air bag device according to any of the preceding claims, **characterized by** enveloping means (6, 91-94) which envelop the air bag package (2) and the inlay element (1, 12, 13, 14), wherein the enveloping means (6, 91-94) fix the air bag package (2) in a shape pushed against the inlay element (1, 12, 13, 14).

9. Air bag device according to Claim 8, **characterized in that** the enveloping means are formed by a flexible envelope (6), wherein the envelope (6) forms at least one foldable area (61) which is designed and suited, in the folded-in state, to come to rest over a fastening element (4) which serves to fasten the air bag device in a vehicle.

10. Air bag device according to any of the preceding claims, **characterized in that** the bore (11) is a rectangular opening.

11. Air bag device according to any of the preceding claims, **characterized in that** the air bag (2) is folded towards the inlay element (1, 12, 13, 14).

12. Air bag device according to any of the preceding claims, **characterized in that** the multiple segments (15, 16, 17) of which the inlay element (1, 12, 13, 14) is made succeeding one another directly in the longitudinal direction of the air bag (2).

13. Method for producing an air bag device according to Claim 1, with the steps:
- Providing an air bag (2),
- Providing an inlay element (1, 12, 13, 14) which is designed as an elongated flat section, has a length and a height and is provided and arranged to define the folded air bag regarding its cross-section dimensions and to thereby fix it with desired cross-section dimensions,
- wherein the inlay element (1) is made of multiple segments (15, 16, 17) succeeding one another in the longitudinal direction of the air bag (2) and wherein at least one segment (16) of the inlay element (1) has a bore (11) through which to pass a fastening means (4) which serves to fasten the air bag device in a vehicle,
- Fastening the inlay element (1, 12, 13, 14) to the air bag (2) and/or placing the inlay element (1, 12, 13, 14) into a pocket (23) or a loop of the air bag (2),
- Folding the air bag (2) to form an air bag package (5) having a length and a height (H), wherein the inlay element (1, 12, 13, 14) has a length which essentially corresponds to the length of at least a section of the air bag package (5), and the inlay element (1, 12, 13, 14) has a height which essentially corresponds to the height (H) of the air bag package (5),
- wherein the segment (16), which has the bore (11) through which to pass a fastening means (4), is foldably fastened on the air bag package (5).

14. Method according to Claim 133, **characterized by** pressing the air bag package (2) against the inlay element (1, 12, 13, 14), wherein the air bag package (5) is reduced in its thickness (B), and by fixing the air bag package (5), reduced in its thickness, during or after the pressing in such a way that the folding and the reduced thickness are maintained.

15. Method according to Claim 133 or 14, **characterized in that** the air bag (2) is folded towards the inlay element (1, 12, 13, 14).

## Revendications

1. Dispositif de sac gonflable pour un système de protection des passagers d'un véhicule, comprenant
- un sac gonflable plié (2) qui forme un paquet de sac gonflable (5), qui présente une longueur et une hauteur (H), et
- un élément d'insertion (1, 12, 13, 14) directement relié avec le sac gonflable (2) et/ou inséré dans celui-ci, qui présente une longueur qui correspond essentiellement à la longueur d'au moins une section du paquet de sac gonflable (5) et qui présente une hauteur qui correspond essentiellement à la hauteur (H) du paquet de sac gonflable (5),
dans lequel l'élément d'insertion est prévu et installé pour définir le sac gonflable plié au niveau de la dimension de sa section et, ce faisant, le fixer avec les dimensions de section souhaitées, et qu'il est réalisé sous forme de profilé plat allongé, et
dans lequel l'élément d'insertion (1, 12, 13, 14) est constitué de plusieurs segments (15, 16, 17) qui se succèdent l'un après l'autre dans la direction longitudinale du sac gonflable (2),
**caractérisé en ce que**
au moins un segment (16) de l'élément d'insertion (1, 12, 13, 14) présente un alésage (11) pour le passage d'un moyen de fixation (4), lequel sert à la fixation du dispositif de sac gonflable dans un véhicule, et **en ce que** ce segment (16) est fixé de façon rabattable sur le paquet de sac gonflable (5) de telle sorte qu'il forme une bride de sac gonflable (8).

2. Dispositif de sac gonflable selon la revendication 1, **caractérisé en ce que** l'élément d'insertion (1) est cousu avec une épaisseur (22a) du sac gonflable (2) et/ou relié avec une épaisseur (22a) du sac gonflable (2) par le biais de moyens de fixation (4) qui servent à une fixation du dispositif de sac gonflable dans un véhicule.

3. Dispositif de sac gonflable selon la revendication 1 ou 2, **caractérisé en ce que** l'élément d'insertion (1) s'étend sur un bord supérieur (25) du sac gonflable (2) devant être fixé dans un véhicule, dans la direction longitudinale du sac gonflable (2), étant entendu que le sac gonflable (2) est plié en direction de l'élément d'insertion (1).

4. Dispositif de sac gonflable selon la revendication 1 ou 2, **caractérisé en ce que** l'élément d'insertion (1) s'étend sur un bord inférieur (26) du sac gonflable (2) devant être plié sur un bord supérieur (25), dans la direction longitudinale du sac gonflable (2), étant entendu que le sac gonflable (2) est plié conjointement avec l'élément d'insertion (1) en direction du bord supérieur (25).

5. Dispositif de sac gonflable selon l'une des revendications précédentes, **caractérisé en ce qu'**une fixation de l'élément d'insertion (1) par rapport au sac gonflable (2) est réalisée au moyen de moyens de fixation (4) qui servent à une fixation du dispositif de sac gonflable dans un véhicule.

6. Dispositif de sac gonflable selon la revendication 5, **caractérisé en ce que** les moyens de fixation (4) comprennent au moins un élément de fixation qui s'étend respectivement au travers d'un alésage (27) d'au moins une épaisseur de sac gonflable (22a) et d'un alésage (11) de l'élément d'insertion (1).

7. Dispositif de sac gonflable selon l'une des revendications précédentes, **caractérisé en ce qu'**au moins deux segments de l'élément d'insertion (1) présentent un profil différent.

8. Dispositif de sac gonflable selon l'une des revendications précédentes, **caractérisé par** des moyens d'enveloppage (6, 91-94) qui enveloppent le paquet de sac gonflable (2) et l'élément d'insertion (1, 12, 13, 14), étant entendu que les moyens d'enveloppage (6, 91-94) maintiennent le paquet de sac gonflable (2) dans une forme spatiale comprimée contre l'élément d'insertion (1, 12, 13, 14).

9. Dispositif de sac gonflable selon la revendication 8, **caractérisé en ce que** les moyens d'enveloppage sont formés par une enveloppe flexible (6), étant entendu que l'enveloppe (6) forme au moins une zone rabattable (61) qui est conçue et adaptée pour arriver à l'installation dans un état rabattu par le biais d'un élément de fixation (4) qui sert à une fixation du dispositif de sac gonflable dans un véhicule.

10. Dispositif de sac gonflable selon l'une des revendications précédentes, **caractérisé en ce que** l'alésage (11) est une ouverture de forme rectangulaire.

11. Dispositif de sac gonflable selon l'une des revendications précédentes, **caractérisé en ce que** le sac gonflable (2) est plié en direction de l'élément d'insertion (1, 12, 13, 14).

12. Dispositif de sac gonflable selon l'une des revendications précédentes, **caractérisé en ce que** les multiples segments (15, 16, 17) dont l'élément d'insertion (1, 12, 13, 14) est constitué se succèdent directement l'un après l'autre dans la direction longitudinale du sac gonflable (2).

13. Procédé de fabrication d'un dispositif de sac gonflable selon la revendication 1, comprenant les étapes :
- préparation d'un sac gonflable (2),
- préparation d'un élément d'insertion (1, 12, 13, 14) qui est réalisé sous forme de profilé plat allongé, qui présente une longueur et une hauteur et qui est prévu et installé pour définir le sac gonflable plié au niveau de la dimension de sa section et, ce faisant, le fixer avec les dimensions de section souhaitées,
- l'élément d'insertion (1) étant constitué de plusieurs segments (15, 16, 17) qui se succèdent l'un après l'autre dans la direction longitudinale du sac gonflable (2) et au moins un segment (16) de l'élément d'insertion (1) présentant un alésage (11) pour le passage d'un moyen de fixation (4), lequel sert à la fixation du dispositif de sac gonflable dans un véhicule,
- fixation de l'élément d'insertion (1, 12, 13, 14) sur le sac gonflable (2) et/ou insertion de l'élément d'insertion (1, 12, 13, 14) dans une poche (23) ou une boucle du sac gonflable (2),
- pliage du sac gonflable (2) pour former un paquet de sac gonflable (5) ayant une longueur et une hauteur (H), étant entendu que l'élément d'insertion (1, 12, 13, 14) présente une longueur qui correspond essentiellement à la longueur d'au moins une section du paquet de sac gonflable (5) et que l'élément d'insertion (1, 12, 13, 14) présente une hauteur qui correspond essentiellement à la hauteur (H) du paquet de sac gonflable (5),
- le segment (16) qui présente l'alésage (11) destiné au passage d'un moyen de fixation (4) étant fixé de façon rabattable sur le paquet de sac gonflable (5).

14. Procédé selon la revendication 13, **caractérisé par** la compression du paquet de sac gonflable (2) contre l'élément d'insertion (1, 12, 13, 14), étant entendu que le paquet de sac gonflable (5) est réduit dans son épaisseur (B), et par la fixation du paquet de sac gonflable (5) d'une épaisseur réduite simultanément ou postérieurement à la compression, de telle sorte que le pliage et l'épaisseur réduite sont maintenus.

15. Procédé selon la revendication 13 ou 14, **caractérisé en ce que** le sac pliable (2) est plié en direction de l'élément d'insertion (1, 12, 13, 14).
